# EUROPEAN PATENT APPLICATION

(11) **EP 4 404 299 A1**
(43) Date of publication of application: **24.07.2024**
(21) Application number: 22956793.8
(22) Date of filing: 30.08.2022
(51) Int. Cl.: H01M 4/36, H01M 10/0525, H01M 4/58

(54) **NEGATIVE ELECTRODE SHEET, SECONDARY BATTERY AND PREPARATION METHOD THEREFOR, BATTERY MODULE, BATTERY PACK, AND ELECTRICAL DEVICE**

(71) Applicant: Contemporary Amperex Technology Co., Limited, Ningde City, Fujian 352100 (CN)
(72) Inventor: GAO, Jingyu, Ningde City, Fujian 352100 (CN); ZHANG, Haiming, Ningde City, Fujian 352100 (CN); YANG, Chenglong, Ningde City, Fujian 352100 (CN); LIU, Xingxing, Ningde City, Fujian 352100 (CN)
(74) Representative: Gong, Jinping
(86) International application number: PCT/CN2022/115810
(87) International publication number: WO 2024/044961

(57) **Abstract**

The present application relates to a negative electrode plate including a negative electrode current collector and a negative electrode film layer on at least one surface of the negative electrode current collector. The negative electrode film layer includes a negative electrode active material, a metal hydride, a conductive agent and a binder, the negative electrode active material including a silicon-based negative electrode active material. The use of the negative electrode plate of the present application can significantly increase the capacity retention rate of the secondary battery, thereby significantly improving the cycling performance of the secondary battery.

## Description

### TECHNICAL FIELD

The present application relates to the technical field of batteries, and particularly to a negative electrode plate, a secondary battery and a method for preparing the same, a battery module, a battery pack and an electrical apparatus.

### BACKGROUND ART

In recent years, secondary batteries are more and more widely used in energy storage power source systems such as water power, thermal power, wind power and solar power stations, as well as power tools, electric bicycles, electric motorcycles, electric vehicles, military equipment, aerospace and other fields. Due to the great development of secondary batteries, higher requirements have also been put forward for their energy density, cycling performance and safety performance. However, the cycling performance of secondary batteries used in the prior art needs to be further improved.

### SUMMARY OF THE INVENTION

The present application is made in view of the above subject, and an objective of the present application is to provide a negative electrode plate, which is intended to improve cycling performance of a secondary battery that includes the negative electrode plate.

To achieve the above objective, a first aspect of the present application provides a negative electrode plate including a negative electrode current collector and a negative electrode film layer on at least one surface of the negative electrode current collector, the negative electrode film layer including a negative electrode active material, a metal hydride, a conductive agent and a binder, where the negative electrode active material includes a silicon-based negative electrode active material.

In any embodiment, the metal hydride has a general formula MHₓ, where M is selected from at least one of Na, Mg, Ca, and Al, optionally M is Mg, x is an integer from 1 to 5, optionally x is 1, 2, or 3; and further optionally, the metal hydride is magnesium hydride.

In any embodiment, the metal hydride in the negative electrode film layer has a mass percentage of 5% to 35%, optionally 8% to 32%, further optionally 10% to 30%, and still further optionally 16% to 24%.

In any embodiment, a mass ratio of the silicon-based negative electrode active material to the metal hydride is 1:(0.5-3.5), optionally 1:(0.8-3.2), further optionally 1:(1-3), and still further optionally 1:(1.6-2.4).

In any embodiment, the negative electrode active material further includes a carbon-based negative electrode active material.

In any embodiment, a mass ratio of the silicon-based negative electrode active material to the carbon-based negative electrode active material is 1:(4-10), optionally 1:(5-8), and further optionally 1:(6-7).

In any embodiment, the silicon-based negative electrode active material is selected from at least one of elemental silicon, a silicon oxide, a silicon-carbon compound, a silicon-nitrogen compound, and a silicon alloy; and/or the silicon-based negative electrode active material has a median particle size Dv50 of 3 µm to 10 µm, optionally 4 µm to 8 µm; and/or the silicon-based negative electrode active material in the negative electrode film layer has a mass percentage of 3% to 20%, optionally 5% to 15%.

In any embodiment, the carbon-based negative electrode active material is selected from at least one of artificial graphite, natural graphite, soft carbon, and hard carbon; and/or the carbon-based negative electrode active material has a median particle size Dv50 of 5 µm to 30 µm, optionally 10 µm to 20 µm; and/or the carbon-based negative electrode active material in the negative electrode film layer has a mass percentage of 30% to 80%, optionally 40% to 78%, and further optionally 50% to 77%.

A second aspect of the present application provides a secondary battery, including a positive electrode plate, a separator, an electrolyte solution and the negative electrode plate described in the first aspect of the present application.

A third aspect of the present application provides a method for preparing the secondary battery described in the second aspect of the present application, which includes a formation step, where the formation step includes at 0.45±0.1V, optionally 0.45±0.05V and at 0.23 ±0.1V, optionally 0.23±0.05V, performing constant-voltage discharge treatment respectively for 0.5 hours to 1.5 hours, optionally 0.8 hours to 1.2 hours.

A fourth aspect of the present application provides a secondary battery prepared by the method described in the third aspect of the present application, where in the negative electrode plate, the particle surface of the silicon-based negative electrode active material contains metal or metal-lithium alloy and lithium hydride, and the metal is selected from at least one of Na, Mg, Ca and Al.

A fifth aspect of the present application provides a battery module including the secondary battery described in the second or fourth aspect of the present application or a secondary battery prepared by the method described in the third aspect of the present application.

A sixth aspect of the present application provides a battery pack including the battery module described in the fifth aspect of the present application.

A seventh aspect of the present application provides an electrical apparatus including at least one of the secondary batteries described in the second or fourth aspect of the present application, the battery module described in the fifth aspect of the present application, or the battery pack described in the sixth aspect of the present application.

The electrical apparatus of the present application includes at least one of the secondary batteries, the battery module or the battery pack provided by the present application, and thus have at least the same advantages as those of the secondary battery.

### DESCRIPTION OF DRAWINGS

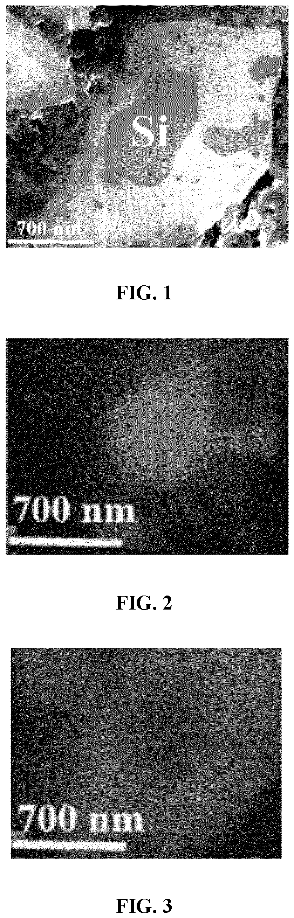

Fig. 1 is an electron micrograph of a cross-section of a negative electrode plate obtained in Example 1 of the present application taken by a LEO-1530 scanning electron microscope, which shows morphology of a silicon particle.
Fig. 2 is a distribution diagram of a silicon element, obtained using an Ultima IV X-ray diffractometer, of the cross-section of the negative electrode plate obtained in Example 1 of the present application.
Fig. 3 is a distribution diagram of a magnesium element, obtained using the Ultima IV X-ray diffractometer, of the cross-section of the negative electrode plate obtained in Example 1 of the present application.
Fig. 4 is a comparison of x-ray diffraction spectrograms of a negative electrode film layer of a secondary battery obtained in Example 1 of the present application before and after 200 cycles of charging and discharging, with magnesium hydride disappearing after the cycles.
Fig. 5 is a schematic diagram of a secondary battery according to an embodiment of the present application.
Fig. 6 is an exploded view of the secondary battery according to an embodiment of the present application shown in Fig. 5.
Fig. 7 is a schematic diagram of a battery module according to an embodiment of the present application.
Fig. 8 is a schematic diagram of a battery pack according to an embodiment of the present application.
Fig. 9 is an exploded view of the battery pack according to the embodiment of the present application shown in Fig. 8.
Fig. 10 is a schematic diagram of an electrical apparatus according to an embodiment of the present application in which the secondary battery is used as a power source.

### Description of reference numerals:

1 battery pack; 2 upper box body; 3 lower box body; 4 battery module; 5 secondary battery; 51 case; 52 electrode assembly; and 53 top cover assembly.

### DETAILED DESCRIPTION

Hereinafter, embodiments that specifically disclose a negative electrode plate, a secondary battery and a method for preparing the same, a battery module, a battery pack, and an electrical apparatus of the present application will be described in detail with reference to the drawings as appropriate. However, unnecessary detailed description will be omitted in some cases. For example, there are cases where detailed descriptions of well-known items and repeated descriptions of actually identical structures are omitted. This is to avoid unnecessarily prolonging the following description, for ease of understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also expected. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, the terms "comprise", "comprising", "include" and "including" mentioned in the present application may be open-ended or closed-ended. For example, the "include" and "comprise" may indicate that it is possible to include or comprise other components not listed, and it is also possible to include or comprise only the listed components.

If not specifically stated, the term "or" is inclusive in the present application. By way of example, the phrase "A or B" means "A, B, or both A and B". More specifically, the condition "A or B" is satisfied under any one of the following conditions: A is true (or present) and B is false (or absent); A is false (or absent) and B is true (or present); or both A and B are true (or present).

If not otherwise specified, in this application, all operations are carried out at room temperature (25°C) and atmospheric pressure (101 kPa).

The inventors have found in their research that in the prior art, in the reaction of a metal hydride and a silicon oxide to produce a silicon-based negative electrode, only the preparation of a negative electrode active material is involved, and not the solid electrolyte interface (SEI) layer on its surface. Unexpectedly, the inventors have found that by adding the metal hydride to the negative electrode active material that includes a silicon-based material, a solid electrolyte interface layer generated in-situ on the surface of a silicon particle can be obtained, which allows a secondary battery to have a significantly improved battery capacity retention rate and improves cycling performance of the battery.

Without being confined to any theory, it is now believed that the silicon-based material in the prior art has a large volume expansion during cycling and has a structure easy to be broken; and more SEI layers are generated on the silicon-based material during cycling. In the present application, by adding the metal hydride to the negative electrode active material, since lithiation processes of the metal hydride and the silicon-based material occur at different potentials, both lead to significant volume expansion, resulting in a strong internal stress inside the electrode. Under this strong internal stress, lithiation products of the metal hydride, i.e., metal and lithium hydride, will migrate to a cracked silicon particle and gradually transform into lithium hydride with ionic conductivity and a conductive matrix with electronic conductivity obtained via partially reversible lithiation of metal. The silicon particle is confined in a mixed conductive matrix of the lithium hydride and metal or metal-lithium alloy, thereby ensuring excellent cycling performance of the silicon-based negative electrode.

Therefore, a first aspect of the present application provides a negative electrode plate. The negative electrode plate includes a negative electrode current collector and a negative electrode film layer on at least one surface of the negative electrode current collector. The negative electrode film layer includes a negative electrode active material, a metal hydride, a conductive agent and a binder, where the negative electrode active material includes a silicon-based negative electrode active material.

In some embodiments, the metal hydride has a general formula MHₓ, where M is selected from at least one of Na, Mg, Ca, and Al, optionally M is Mg, x is an integer from 1 to 5, optionally x is 1, 2, or 3; and further optionally, the metal hydride is magnesium hydride.

In some embodiments, the metal hydride has a median particle size Dv50 of 50 nm to 200 nm, optionally 100 nm to 150 nm.

Dv50 has a meaning well known in the art and can be determined using instruments and methods known in the art. For example, it can be determined by using a laser particle size analyzer (e.g., Master Size 3000) with reference to the GB/T 19077-2016 Particle size analysis-Laser diffraction method.

In some embodiments, the negative electrode current collector has two opposite surfaces in its own thickness direction, and the negative electrode film layer is arranged on either or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the metal hydride in the negative electrode film layer has a mass percentage of 5% to 35%, optionally 8% to 32%, further optionally 10% to 30%, and still further optionally 16% to 24%.

When the percentage of the metal hydride is within the above range, particles of the silicon negative electrode active material can be better protected and limited, and particle crushing due to expansion can be better avoided during cycling, which facilitates the cycling performance of the secondary battery. Advantageously, local aggregation of the metal hydride and a reaction product can also be avoided, which facilitates the stability and extractable gram capacity of the negative electrode plate.

In some embodiments, a mass ratio of the silicon-based negative electrode active material to the metal hydride is 1:(0.5-3.5), optionally 1:(0.8-3.2), further optionally 1:(1-3), further optionally 1:(1.5-2.8), and still further optionally 1: (1.6-2.4).

When the silicon-based negative electrode active material and the metal hydride are within the above mass ratio, on the one hand, it is favorable to the continuity and integrity of the solid electrolyte layer with high electronic conductivity and ironic conductivity that is compounded on the surface of the silicon particle, and can better limit the volume expansion of the silicon particle during cycling; on the other hand, it can better avoid excessive aggregation of the metal hydride with the reaction product, ensuring the extractable capacity and cycling stability of the whole active material.

In some embodiments, the negative electrode active material further includes a carbon-based negative electrode active material.

In some embodiments, a mass ratio of the silicon-based negative electrode active material to the carbon-based negative electrode active material is 1:(4-10), optionally 1:(5-8), further optionally 1:(6-7), and still further optionally 1:(6.1-6.8).

In some embodiments, the silicon-based negative electrode active material is selected from at least one of elemental silicon, a silicon oxide, a silicon-carbon compound, a silicon-nitrogen compound, and a silicon alloy; and/or the silicon-based negative electrode active material has a median particle size Dv50 of 3 µm to 10 µm, optionally 4 µm to 8 µm; and/or the silicon-based negative electrode active material in the negative electrode film layer has a mass percentage of 3% to 20%, optionally 5% to 15%, and further optionally 7% to 12%.

In some embodiments, the carbon-based negative electrode active material is selected from at least one of artificial graphite, natural graphite, soft carbon, and hard carbon; and/or the carbon-based negative electrode active material has a particle size of 5µm to 30 µm, optionally 10 µm to 20 µm, and further optionally 12 µm to 18 µm; and/or the carbon-based negative electrode active material in the negative electrode film layer has a mass percentage of 30% to 80%, optionally 40% to 78%, further optionally 50% to 77%, still further optionally 55% to 76.5%, and still further optionally 65% to 71%.

In some embodiments, the negative electrode film layer further includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the conductive agent in the negative electrode film layer has a mass percentage of 0.4% to 1.5%, optionally 0.6% to 1.0%.

In some embodiments, the negative electrode film layer further includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the binder in the negative electrode film layer has a mass percentage of 0.5% to 1.5%, optionally 0.6% to 1.2%.

In some embodiments, the negative electrode film layer may further optionally include other auxiliaries, for example, a thickener (e.g., sodium carboxymethyl cellulose (CMC-Na)). Optionally, the thickener in the negative electrode film layer has a mass percentage of 0.6% to 2%, optionally 1% to 1.5%.

In some embodiments, the negative electrode plate can be prepared by dispersing the components for preparing the negative electrode plate, for example, the negative electrode active material, the metal hydride, the conductive agent, the binder and any other components in an organic solvent to form a negative electrode slurry; and coating the negative electrode slurry on a negative electrode current collector, followed by oven drying, cold pressing and other procedures, to obtain the negative electrode plate.

A second aspect of the present application provides a secondary battery, including a positive electrode plate, a separator, an electrolyte solution and the negative electrode plate described in the first aspect of the present application.

A third aspect of the present application provides a method for preparing the secondary battery described in the second aspect of the present application, which includes a formation step, where the formation step includes at 0.45±0.1V, optionally 0.45±0.05V and at 0.23 ±0.1V, optionally 0.23±0.05V, performing constant-voltage discharge treatment respectively for 0.5 hours to 1.5 hours, optionally 0.8 hours to 1.2 hours.

In some embodiments, in the case of magnesium hydride, for example, the following reactions may occur at different potentials during cycling of the silicon-based negative electrode:
At voltage of 0.45V: MgH₂+2Li⁺+2e⁻ ↔ Mg+2LiH (1)
At voltage of 0.32V: 7Si+12Li⁺+12e⁻ ↔ Li₁₂Si₇ (2)
At voltage of 0.23V: Mg+xLi⁺+xe⁻ ↔ LixMg (3)
At voltage of 0.16V: 4Li₁₂Si₇+43Li+43e⁻ ↔ 7Li₁₃Si₄ (4)
At voltage of 0.04V: 5Li₁₃Si₄+23Li⁺+23e⁻ ↔ 4Li₂₂Si₅ (5)

During a first cycle of discharge, a first plateau at about 0.45 V occurs when MgH₂ undergoes a conversion reaction to produce Mg and LiH while a strong internal stress is generated due to volume expansion of MgH₂ particle, followed by the lithiation of Si leading to a sharp volume expansion of Si particle to drive lithiation products Mg and LiH with the internal stress to migrate into a gap of the cracked Si particle so that Mg and Li undergo a partially reversible alloying reaction to form electrochemically inert LixMg (x from 0.5 to 2) alloys. During discharge, volume shrinkage due to delithiation causes fragmentation of the Si particle, while MgH₂ is gradually consumed as the reaction continues until the reaction plateau disappears completely, which represents the complete conversion from MgH₂ to LixMg and LiH. It can act as a hybrid conductive matrix around the cracked Si particle, limiting further expansion of the Si particle and improving the cycling performance of the silicon-based negative electrode.

Optionally, in order to guarantee the complete conversion of MgH₂ to LixMg and LiH, with reference to the above reaction equations (1) and (3), a constant-voltage discharge process for 0.5 h to 1.5 h, optionally 0.8 h to 1.2 h needs to be carried out in the first discharge process, so that the MgH₂ can be completely consumed and converted into the conductive matrix of LixMg and LiH within the first cycle and migrate to the surface of the silicon particle, thus fully reflecting the role of the composite conductive matrix in limiting volume expansion and high ionic conductivity, ensuring the structural integrity and excellent electrochemical performance of the silicon-based negative electrode in the later cycle.

A fourth aspect of the present application provides a secondary battery prepared by the method described in the third aspect of the present application, where in the negative electrode plate, the particle surface of the silicon-based negative electrode active material contains metal or metal-lithium alloy and lithium hydride, and the metal is selected from at least one of Na, Mg, Ca and Al.

Since the solid electrolyte interface layer generated on the surface of the silicon particle contains metal or metal-lithium alloy and lithium hydride, where the lithium hydride has high ionic conductivity and the metal or the lithium-metal alloy has high electronic conductivity, the particle integrity of the silicon-based negative electrode and the rapid electrochemical reaction are guaranteed when the silicon particle is confined to the solid electrolyte interface layer of the lithium hydride and the metal or metal-lithium alloy, and thus the electrochemical performance of the silicon-based negative electrode is improved. Here, the expression "contains metal or metal-lithium alloy and lithium hydride" should be understood as that the metal or metal-lithium alloy and lithium hydride is attached to the surface of the silicon particle without damaging the overall structure of the silicon particle.

### Secondary battery

A secondary battery refers to a battery that can be used continually by activating a active material in a charging manner, after the battery is discharged.

Generally, a secondary battery includes a positive electrode plate, a negative electrode plate, a separator, and an electrolyte. During charging and discharging of the battery, active ions are intercalated and deintercalated back and forth between the positive electrode plate and the negative electrode plate. The separator is disposed between the positive electrode plate and the negative electrode plate and functions to separate. The electrolyte serves to conduct ions between the positive electrode plate and the negative electrode plate.

### [Positive electrode plate]

The positive electrode plate typically includes a positive electrode current collector and a positive electrode film layer provided on at least one surface of the positive electrode current collector, where the positive electrode film layer includes a positive electrode active material.

As an example, the positive electrode current collector has two opposite surfaces in its own thickness direction, and the positive electrode film layer is arranged on either or both of the opposite surfaces of the positive electrode current collector.

In some embodiments, the positive electrode current collector may be a metal foil current collector or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode active material in the positive electrode film layer has a mass percentage of 93% to 98%, optionally 95% to 97%.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the binder in the positive electrode film layer has a mass percentage of 1% to 5%, optionally 2% to 4%.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the conductive agent in the positive electrode film layer has a mass percentage of 1% to 4%, optionally 2% to 3%.

In some embodiments, the positive electrode plate can be prepared by dispersing the components for preparing the positive electrode plate, for example, the positive electrode active material, the conductive agent, the binder and any other components in a solvent (e.g., N-methyl pyrrolidone) to form a positive electrode slurry; and coating the positive electrode slurry on a positive electrode current collector, followed by oven drying, cold pressing and other procedures, to obtain the positive electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gel state, or an all-solid state.

In some embodiments, the electrolyte is in a liquid state, and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, methylsulfonylmethane, ethyl methyl sulfone and ethyl sulfonyl ethane.

In some embodiments, the electrolyte salt in the solvent has a percentage of 10% to 15%, optionally 12% to 13%, based on the weight of the solvent.

In some embodiments, the electrolyte solution may further optionally include an additive. As an example, the additive may include a negative electrode film-forming additive and a positive electrode film-forming additive, and may further include additives that can improve certain battery properties, such as additives that improve battery overcharge performance, additives that improve battery high or low temperature performance, and the like.

### [Separator]

In some embodiments, the secondary battery further includes a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

In some embodiments, the positive electrode plate, the negative electrode plate, and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a pouch. The pouch may be made of a plastic, and examples of the plastic include polypropylene, polybutylene terephthalate and polybutylene succinate.

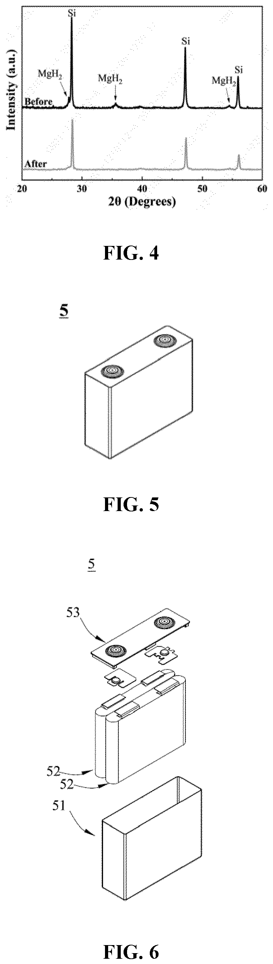

The present application has no particular limitation on the shape of the secondary battery, which may be cylindrical, square or any other shape. For example, Fig. 5 shows a secondary battery 5 with a square structure as an example.

In some embodiments, referring to Fig. 6, the outer package may include a case 51 and a cover plate 53. Here, the case 51 may include a bottom plate and a side plate connected to the bottom plate, with the bottom plate and the side plate enclosing to form an accommodating cavity. The case 51 has an opening that communicates with the accommodating cavity, and the cover plate 53 is capable of covering the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 included in the secondary battery 5 may be one or more, which may be selected by those skilled in the art according to specific actual requirements.

A fifth aspect of the present application provides a battery module including the secondary battery described in the second or fourth aspect of the present application or a secondary battery prepared by the method described in the third aspect of the present application.

In some embodiments, the secondary batteries may be assembled into a battery module, the number of the secondary batteries included in the battery module may be one or more, and the specific number can be selected by those skilled in the art according to the application and capacity of the battery module.

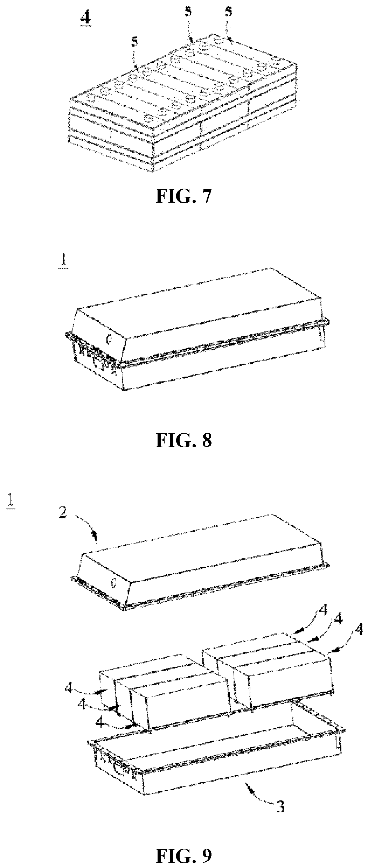

Fig. 7 is an example of a battery module 4. Referring to Fig. 7, in the battery module 4, a plurality of secondary batteries 5 may be sequentially arranged in a length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 are accommodated.

A sixth aspect of the present application provides a battery pack including the battery module described in the fifth aspect of the present application.

In some embodiments, the battery module may further be assembled into a battery pack, the number of battery modules included in the battery pack may be one or more, and the specific number can be selected by those skilled in the art according to the application and capacity of the battery pack.

Figs. 8 and 9 show a battery pack 1 as an example. Referring to Figs. 8 and 9, the battery pack 1 may include a battery box and a plurality of battery modules 4 disposed in the battery box. The battery box includes an upper box body 2 and a lower box body 3, the upper box body 2 can cover the lower box body 3 to form a closed space for accommodating the battery modules 4. The plurality of battery modules 4 may be arranged in the battery box in any manner.

A seventh aspect of the present application provides an electrical apparatus including at least one of the secondary batteries described in the second or fourth aspect of the present application, the battery module described in the fifth aspect of the present application, or the battery pack described in the sixth aspect of the present application. The secondary battery, battery module, or battery pack may be used as a power source for the electrical apparatus, and may also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

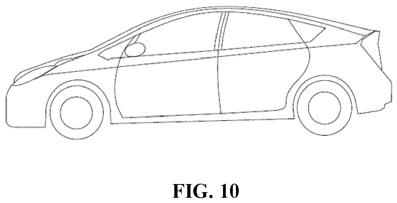

Fig. 10 is an example of an electrical apparatus. The electrical apparatus is an all-electric vehicle, a hybrid electric vehicle or a plug-in hybrid electric vehicle, and the like. In order to meet the requirements of the electrical apparatus for high power and high energy density of secondary batteries, a battery pack or a battery module may be used.

The beneficial effects of the present application are further illustrated below in conjunction with the examples.

### [Examples]

Examples of the present application will be described hereinafter. The examples described below are illustrative and only used for explaining this application, and cannot be construed as limitations on this application. Where specific techniques or conditions are not specified in the examples, the techniques or conditions described in the literatures of the art or the product specifications are followed. Where manufacturers are not specified, the reagents or instruments used are conventional products and are commercially available.

### Example 1

### [Preparation of silicon-based negative electrode plate]

Active material silicon particles (Dv50 = 6 µm), magnesium hydride (Dv50=120 nm), artificial graphite (Dv50=14 µm), a conductive agent carbon black, a binder styrene butadiene rubber (SBR), and a thickener sodium hydroxymethyl cellulose (CMC-Na) were dissolved in a solvent N-methylpyrrolidone at a weight ratio of 10:20:67.2:0.8:0.8:1.2. The solution was sufficiently mixed to prepare a negative electrode slurry, with solid content of 48%. The negative electrode slurry was uniformly coated on a copper foil of a negative electrode current collector, followed by drying, cold pressing, and slitting to obtain a negative electrode plate.

### [Preparation of electrolyte solution]

In a glove box in an argon atmosphere (H₂O<0.1ppm, O₂<0.1ppm), an organic solvent of ethylene carbonate (EC)/ethyl methyl carbonate (EMC) was mixed uniformly in a volume ratio of 3/7, lithium salt of LiPF₆ with a mass ratio of 12.5% was dissolved in the organic solvent and stirred uniformly to obtain an electrolyte solution of Example 1.

### [Separator]

A polypropylene film was used as the separator.

### [Preparation of lithium-ion battery]

The silicon-based negative electrode plate, the separator and a lithium metal electrode plate were stacked in sequence, so that the separator was positioned between the silicon-based electrode plate and the lithium metal electrode plate and functioned to separate, and then a bare cell was obtained by winding, a tab was welded to the bare cell, the bare cell was put into an aluminum case, baked at 80°C to remove water, and then the electrolyte solution was injected and encapsulated to obtain an uncharged battery. The uncharged battery then went through processes such as standing, hot and cold pressing, formation, shaping and capacity testing successively to obtain a lithium-ion battery product of Example 1. Constant-voltage discharge treatment was carried out respectively at 0.45V and 0.23V for 1h during formation.

### Example 2

Except that the weight ratio of silicon particles, magnesium hydride, and artificial graphite in the negative electrode plate is changed to 10:10:76.2, other steps in Example 2 are the same as in Example 1.

### Example 3

Except that the weight ratio of silicon particles, magnesium hydride, and artificial graphite in the negative electrode plate is changed to 10:15:71.2, other steps in Example 3 are the same as in Example 1.

### Example 4

Except that the weight ratio of silicon particles, magnesium hydride, and artificial graphite in the negative electrode plate is changed to 10:25:61.2, other steps in Example 4 are the same as in Example 1.

### Example 5

Except that the weight ratio of silicon particles, magnesium hydride, and artificial graphite in the negative electrode plate is changed to 10:30:56.2, other steps in Example 5 are the same as in Example 1.

### Example 6

Except that durations of the constant-voltage discharge treatment process carried out at 0.45 V and 0.23 V respectively during formation are changed to 0 h and 0 h, other steps in Example 6 are the same as in Example 1.

### Example 7

Except that durations of the constant-voltage discharge treatment process carried out at 0.45 V and 0.23 V respectively during formation are changed to 0 h and 1 h, other steps in Example 7 are the same as in Example 1.

### Example 8

Except that durations of the constant-voltage discharge treatment process carried out at 0.45 V and 0.23 V respectively during formation are changed to 1 h and 0 h, other steps in Example 8 are the same as in Example 1.

### Comparative Example 1

The preparation method is similar to that in Example 1, with the difference that magnesium hydride is not used, the weight ratio of the active substance silicon particles, artificial graphite, the conductive agent carbon black, the binder styrene-butadiene rubber (SBR), and the thickener sodium hydroxymethylcellulose (CMC) is 10: 87.2: 0.8: 0.8: 1.2, and the constant-voltage discharge treatment process is not carried out during formation.

### [Silicon-based negative electrode plate test]

Relevant parameters of silicon-based negative electrode plates of the examples and comparative examples of the present application are tested as follows:

### 1. Morphology test

The silicon negative electrode plates were tested with a LEO-1530 scanning electron microscope, followed by observing the silicon particle morphology.

### 2. X-ray diffraction test

The silicon negative electrode plates were tested using an Ultima IV X-ray diffractometer, followed by examining physical phases of the silicon negative electrode plates.

### [Battery performance test]

### Battery capacity retention rate test

The lithium-ion batteries prepared in the examples and the comparative examples were discharged at a constant current of 0.1 C to 0.01 V, and then discharged at 0.1 C to 1.0 V at 25°C, and the resulting capacity was recorded as initial capacity C0. The above steps were repeated for the same battery, and discharge capacity Cn of the battery after the nth time of cycling was recorded, then the battery capacity retention rate Pn=Cn/C0*100% after each cycle. After 200 cycles, C200 was recorded and P200=C200/C0*100% was obtained by calculation.

**Table 1: Performance test conditions and results of Examples 1-8 and Comparative Example 1**

| | Weight ratio of silicon particles/magnesium hydride/artificial graphite | Constant-voltage treatment condition during formation | Battery capacity retention rate after 200 cycles |
|---|---|---|---|
| Example 1 | 10:20: 66.2 | 1h at 0.45V+1h at 0.23V | 91% |
| Example 2 | 10:10:76.2 | 1h at 0.45V+1h at 0.23V | 83% |
| Example 3 | 10:15:71.2 | 1h at 0.45V+1h at 0.23V | 87% |
| Example 4 | 10:25:61.2 | 1h at 0.45V+1h at 0.23V | 88% |
| Example 5 | 10:30:56.2 | 1h at 0.45V+1h at 0.23V | 85% |
| Example 6 | 10:20: 66.2 | 0h at 0.45V+0h at 0.23V | 84% |
| Example 7 | 10:20: 66.2 | 0h at 0.45V+1h at 0.23V | 86% |
| Example 8 | 10:20: 66.2 | 1h at 0.45V+0h at 0.23V | 88% |
| Comparative Example 1 | 10:0:86.2 | 0h at 0.45V+0h at 0.23V | 80% |

It can be seen from Table 1 that by using the metal hydride of the present application in the silicon-containing negative electrode active material, especially in conjunction with the formation treatment of the present application, the cycling capacity retention rate of the battery can be significantly improved.

It should be noted that the present application is not limited to the above embodiments. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications applied to the embodiments that can be conceived by those skilled in the art, and other modes constructed by combining some of the constituent elements of the embodiments are also included in the scope of the present application.

## Claims

1. A negative electrode plate, comprising a negative electrode current collector and a negative electrode film layer on at least one surface of the negative electrode current collector, the negative electrode film layer comprising a negative electrode active material, a metal hydride, a conductive agent and a binder, wherein the negative electrode active material comprises a silicon-based negative electrode active material.

2. The negative electrode plate according to claim 1, wherein the metal hydride has a general formula MHₓ, where M is selected from at least one of Na, Mg, Ca, and Al, optionally M is Mg, x is an integer from 1 to 5, optionally x is 1, 2, or 3; and further optionally, the metal hydride is magnesium hydride.

3. The negative electrode plate according to claim 1 or 2, wherein the metal hydride in the negative electrode film layer has a mass percentage of 5% to 35%, optionally 8% to 32%, further optionally 10% to 30%, and still further optionally 16% to 24%.

4. The negative electrode plate according to any one of claims 1 to 3, wherein a mass ratio of the silicon-based negative electrode active material to the metal hydride is 1: (0.5-3.5), optionally 1: (0.8-3.2), further optionally 1: (1-3), and still further optionally 1: (1.6-2.4).

5. The negative electrode plate according to any one of claims 1 to 4, wherein the negative electrode active material further comprises a carbon-based negative electrode active material.

6. The negative electrode plate according to any one of claims 1 to 5, wherein a mass ratio of the silicon-based negative electrode active material to the carbon-based negative electrode active material is 1:(4-10), optionally 1:(5-8), and further optionally 1:(6-7).

7. The negative electrode plate according to any one of claims 1 to 6, wherein the silicon-based negative electrode active material is selected from at least one of elemental silicon, a silicon oxide, a silicon-carbon compound, a silicon-nitrogen compound, and a silicon alloy; and/or the silicon-based negative electrode active material has a median particle size Dv50 of 3 µm to 10 µm, optionally 4 µm to 8 µm; and/or the silicon-based negative electrode active material in the negative electrode film layer has a mass percentage of 3% to 20%, optionally 5% to 15%.

8. The negative electrode plate according to any one of claims 1 to 7, wherein the carbon-based negative electrode active material is selected from at least one of artificial graphite, natural graphite, soft carbon, and hard carbon; and/or the carbon-based negative electrode active material has a median particle size Dv50 of 5 µm to 30 µm, optionally 10 µm to 20 µm; and/or the carbon-based negative electrode active material in the negative electrode film layer has a mass percentage of 30% to 80%, optionally 40% to 78%, and further optionally 50% to 77%.

9. A secondary battery, comprising a positive electrode plate, a separator and an electrolyte and the negative electrode plate of any one of claims 1 to 8.

10. A method for preparing a secondary battery according to claim 9, comprising a formation step, wherein the formation step comprises at 0.45±0.1V, optionally 0.45±0.05V and at 0.23 ±0.1V, optionally 0.23±0.05V, performing constant-voltage discharge treatment respectively for 0.5 hours to 1.5 hours, optionally 0.8 hours to 1.2 hours.

11. The secondary battery prepared by the method according to claim 10, wherein in the negative electrode plate, the particle surface of the silicon-based negative electrode active material contains metal or metal lithium alloy and lithium hydride, and the metal is selected from at least one of Na, Mg, Ca and Al.

12. A battery module, comprising the secondary battery according to claim 9 or 11 or a secondary battery prepared by the method according to claim 10.

13. A battery pack, comprising the battery module according to claim 12.

14. An electrical apparatus, comprising at least one of the secondary batteries according to claim 9 or 11, the battery module according to claim 12, or the battery pack according to claim 13.
